# EUROPÄISCHE PATENTSCHRIFT

(11) **EP 0 728 078 B1**
(45) Veröffentlichungstag und Bekanntmachung des Hinweises auf die Patenterteilung: **01.12.1999**
(21) Anmeldenummer: 95933389.9
(22) Anmeldetag: 18.09.1995
(51) Int. Cl.: B60H 1/00

(54) **KRAFTFAHRZEUG-KLIMAANLAGE**
AIR CONDITIONING SYSTEM FOR A MOTOR VEHICLE
SYSTEME DE CLIMATISATION POUR VEHICULE AUTOMOBILE

(30) Priorität: 19.09.1994 EP 94114743
(43) Veröffentlichungstag der Anmeldung: 28.08.1996
(73) Patentinhaber: Valeo Klimasysteme GmbH, 96476 Rodach (DE)
(72) Erfinder: HILDEBRAND, Reinhard, D-96257 Redwitz (DE)
(74) Vertreter: COHAUSZ HANNIG DAWIDOWICZ & PARTNER
(86) Internationale Anmeldenummer: EP9503671
(87) Internationale Veröffentlichungsnummer: WO9609180

(56) Entgegenhaltungen:
- EP-A- 0 216 104
- EP-A- 0 363 038
- FR-A- 2 437 312
- US-A- 4 456 055
- US-A- 5 127 576
- US-A- 5 226 472
- US-A- 5 275 012

## Beschreibung

Die Erfindung betrifft eine Kraftfahrzeug-Klimaanlage mit über ein einziges Temperierungs-Stellmittel (T) einstellbarer Temperierung des Innenraums zwischen einer unteren Kühltemperatur einerseits und einer oberen Heiztemperatur andererseits durch entsprechende Kühlung bzw. Erwärmung eines in den Innenraum geförderten Luftstromes, wobei mittels Verstellung des Temperierungs-Stellmittels (T) in einem ersten Stellbereich, insbesondere im Bereich von 0-30% des gesamten Stellbereiches, ein Kälteerzeuger (VD ; KP) von einer hohen Kälteleistung auf eine geringe Kälteleistung sowie in einem letzten Stellbereich ein Nutzwärmeerzeuger (EH bzw. D) von einer geringen Wärmeleistung auf eine höhere Wärmeleistung verstellbar ist.

Eine solche Kraftfahrzeug-Klimaanlage ist aus EP 363 038 bekannt.

In dieser und in anderen bekannten Klimaanlagen wird zur Kälteerzeugung bzw. Entfeuchtung bei zu hoher Innentemperatur von einem mit dem Antriebsmotor des Kraftfahrzeuges gekuppelten Kälteerzeuger ausgegangen und zur Wärmeerzeugung bei zu niedriger Innentemperatur der von dem Kühlkreislauf des Antriebsmotors des Kraftfahrzeuges und somit von dessen Abwärme gespeiste Wärmetauscher zugeschaltet. Die Steuerung bzw. Regelung der Innentemperatur erfolgt dabei im wesentlichen durch luftseitige Einstellung durch Verstellen einer Mischluftklappe am Eingang eines Mischraums, durch die das Verhältnis von eintretender Kaltluft zu eintretender Warmluft veränderbar ist und/oder bei wasserseitiger Einstellung durch das Verstellen eines Ventils, durch das der Zufluß der durch Abwärme des Kraftfahrzeugmotors erwärmten Kühlflüssigkeit zu dem Wärmetauscher veränderbar ist. Eine derartige Klimaanlage erfordert einen hohen Energie- und Bedienungsaufwand und kann auf unterschiedliche Temperaturverhältnisse im Innenraum des Kraftfahrzeuges nur träge oder sogar überhaupt nicht reagieren.

Aus der US 5 275 012 ist eine Klimaanlage bekannt, bei der der Kälteerzeuger von einem Elektromotor angetrieben wird. Der dort offenbarte Nutzwärmeerzeuger ist jedoch vom Kühlmittelfluß im Fahrzeug abhängig. Auch bei dieser Klimaanlage ist eine Regulierung der Temperatur des Innenraumes nur mit vergleichsweise hohem Energieaufwand und unter großen Einstellzeiten möglich.

Aufgabe der vorliegenden Erfindung ist eine schnellere Anpassung an unterschiedliche Temperaturverhältnisse bei gleichzeitig wesentlich vereinfachter Bedienung und verringertem Energieaufwand.

Diese Aufgabe wird durch eine Klimaanlage nach dem Anspruch 1 gelöst. Vorteilhafte Ausgestaltungen der Erfindung sind jeweils Gegenstand der Unteransprüche.

Durch die Verwendung eines unabhängigen vom Motorantrieb des Kraftfahrzeuges selbständig regel- bzw. steuerbaren Kälteerzeugers einerseits und eines regel- bzw. steuerbaren gesonderten und somit von der jeweiligen Abwärmemenge des Kühlmittels des Motorantriebes unabhängigen Nutzwärmeerzeugers ist eine an die jeweilige Temperatur des Inneraums mit nur unbedingt notwendigem Energieaufwand anpaßbare Temperierung schnell und durch die Einstellverbindung des Kälteerzerugers bzw. des Nutzwärmeerzeugers mit einem einzigen Stellmittel auch auf einfache Weise möglich.

Die vorbeschriebene erfindungsgemäße Kraftfahrzeug-Klimaanlage mit einem an den Stellbereich des Kälteerzeugers anschließenden Stellbereich des Nutzwärmerzeugers eignet sich insbesondere für Fahrzeuge ohne übliche luftseitige Einstellung durch eine Mischluftklappe und/oder wasserseitige Einstellung eines von Abwärme des Kühlwassers des Motorantriebs des Kraftfahrzeugs gespeisten Wärmetauscher und somit insbesondere für ohne Abwärmeausnutzung betriebene Klimaanlagen. Bei Verwendung für Kraftfahrzeuge mit alleinigem oder teilweisem Antrieb durch einen Verbrennungsmotor mit Kühlwasserkreislauf durch einen Wärmetauscher in der Klimaanalge und einer luftseitigen Temperierungseinstellung durch eine Mischluftklappe in einem Mischraum, dem eingangsseitig einerseits Frischluft bzw. andererseits durch einen kühlwassergespeisten Wärmetauscher erwärmte Luft zuführbar ist, wird nach einem bevorzugten Ausführungsbeispiel der Erfindung zwischen dem ersten Stellbereich und dem letzten Stellbereich ein mittlerer Stellbereich mit luftseitiger Verstellung durch zumindest eine Mischluftklappe in einem Mischraum und/oder mit wasserseitiger Verstellung durch zumindest ein Ventil in einem abwärmegespeisten Wärmetauscher vorgesehen.

Der erste Stellbereich erstreckt sich bevorzugt über 0-30% des gesamten Stellbereichs des einzigen Temperierungs-Stellmittels und der Stellbereich des Nutzwärmeerzeugers bei Vorhandensein eines mittleren Stellbereichs mit luftseitiger bzw. wasserseitiger Verstellung auf einen Stellbereich von 60-100% des gesamten Stellbereichs des einzigen Temperierungs-Stellmittels.

Die Erfindung sowie weitere vorteilhafte Ausgestaltungen der Erfindung gemäß Merkmalen der Unteransprüche werden im folgenden anhand schematisch dargestellter Ausführungsbeispiele in der Zeichnung näher erläutert; darin zeigen:
- FIG 1,2: zwei unterschiedliche Ansichten der Frontblende eines Bediengerätes mit jeweils einem einzigen Temperierungs-Stellmittel;
- FIG 3,5,7,9: vier verschiedene Ausstattungsvarianten eines erfindungsgemäßen Klimagerätes;
- FIG 4,6,8,10: die jeweiligen Betätigungsverläufe des Temperierungs-Stellmittels der Klimaanlage über dessen gesamten Stellbereichs.

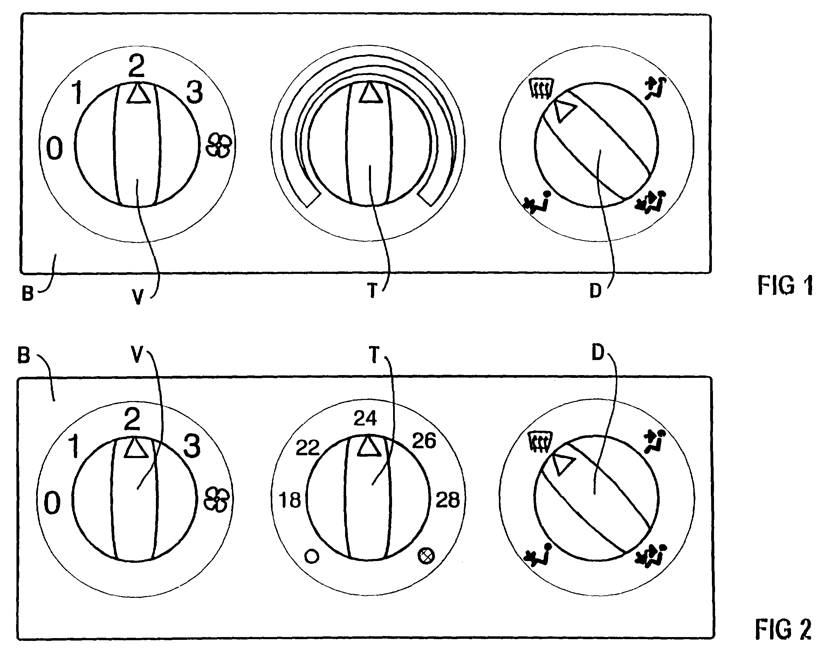

FIG 1,2 zeigen jeweils die Frontblende einer in der Mittelebene, insbesondere im Armaturenbrett, eines Kraftfahrzeuges angebrachten zentralen Bedieneinheit B mit einem Ventilatorschalter V zur Luftmengensteuerung, über den z.B. die Drehzahlstufen eines zentralen Ventilators am Eingang des Heiz- bzw. Klimagerätes einstellbar sind, weiterhin mit einem Luftverteil-Einstellelement D mit vier, mit entsprechenden die jeweilige Strömungsrichtung kennzeichnenden Symbolen sowie mit einem mittigen Temperierungs-Stellmittel T zur Einstellung einer gewünschten Temperatur im Innenraum des Kraftfahrzeuges. FIG 1 zeigt eine Bedieneinheit zur Steuerung und FIG 2 eine Bedieneinheit zur Regelung der jeweiligen Innentemperatur. Das als Drehknopf ausgebildete Temperierungs-Stellmittel T ist über einen Stellbereich von ca. 270° verstellbar.

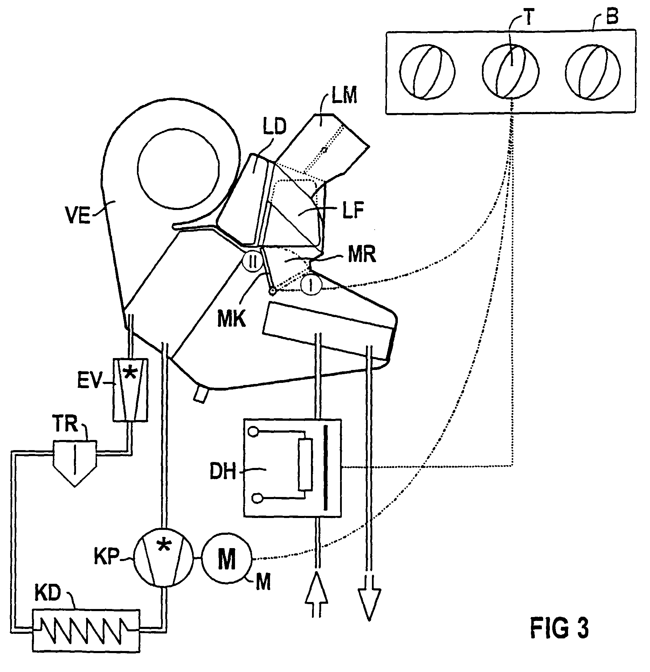

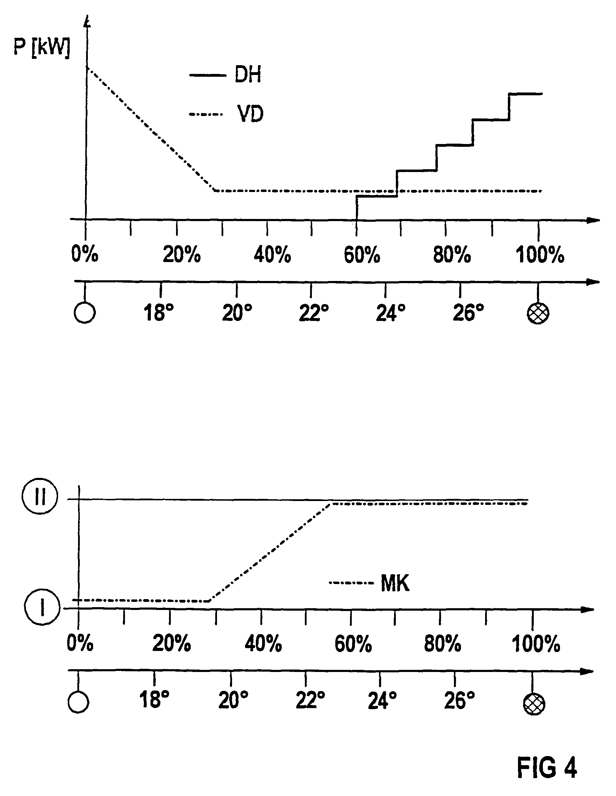

FIG 3,4 zeigen ein erstes Ausführungsbeispiel einer erfindungsgemäßen Klimaanlage; dabei wird ausgegangen von einem grundsätzlich, z.B. durch die EP-B2-0 016 104, bekannten Aufbau mit in einem Kunststoffgehäuse eingangsseitig angeordnetem Ventilator VE, einem im Luftstrom folgenden Verdampfer VD, einer anschließenden Aufteilung des Luftstroms zu einem Mischraum MR entweder als direkter Frischluftstrom oder als über einen durch die Kühlflüssigkeit des Antriebsmotors des Kraftfahrzeuges gespeisten Wärmetauscher erwärmten Warmluftstrom und mit einem anschließenden Austritt der temperierten Luftströme in einen Defrost-Luftkanal LD bzw. einen Mittelebenen-Luftkanal LM bzw. einen Fußraum-Luftkanal LF. Dabei kann die Temperierung rein luftseitig durch die Verstellung einer Mischluftklappe MK am Eingang des Mischraums MR dadurch erfolgen, daß die Mischluftklappe MK mit Zwischenstellungen zwischen einer ersten Schließstellung I mit vollständigem Verschluß des Warmluftstroms und vollständigem Zutritt des Frischluftstroms einerseits und einer zweiten Endstellung II mit vollständigem Verschluß des Frischluftstroms und vollständiger Freigabe des Warmluftstroms verstellbar ist.

Erfindungsgemäß ist im Kühlkreislauf neben den üblichen Bauteilen eines Verdampfers VD, eines Expansionsventils EV, eines Trockners TR sowie eines Kondensators KD jeweils ein vom Antriebsmotor des Kraftfahrzeuges unabhängig steuerbarer bzw. regelbarer, von einem Elektromotor M angetriebener Kompressor KP vorgesehen; weiterhin ist erfindungsgemäß in Ergänzung zu dem durch Abwärme gespeisten Wärmetauscher WT in dessen Kreislauf ein Nutzwärmeerzeuger in Form eines Durchlauferhitzer DH angeordnet, der von dem einzigen Temperierungs-Stellmittel T in einem letzten Stellbereich einstellbar ist.

Wie aus den Funktionsverlaufen gemäß FIG 4 ersichtlich, erfolgt die Verstellung des Kälteerzeugers (VD;KP) über die jeweilige Einstellung des Kompressors KP in einem ersten Stellbereich, vorzugsweise im Bereich von 0-30% seines gesamten Stellbereichs und insbesondere kontinuierlich, von einer oberen Kälteleistung auf eine geringere, zweckmäßigerweise noch eine hinreichende Entfeuchtung der Innenraumluft gewährleistenden Kälteleistung; selbstverständlich wird die Kühlung bei Erreichen von mit einer Vereisungsgefahr verbundener Temperatur selbsttätig abgeschaltet. In einem letzten Stellbereich, vorzugsweise von ca. 60-100% des gesamten Stellbereichs des einzigen Temperierungs-Stellmittels T und insbesondere stufenweise, wird ein der Nutzwärmeerzeuger in Form eines Durchlauferhitzers DH von einer unteren Wärmeleistung auf eine höhere Wärmeleistung verstellt. Bei an sich vorhandener luftseitiger Temperierung mittels einer Mischluftklappe MK und eines kühlmittelerwärmten Wärmetauschers WT ist zwischen dem ersten Stellbereich und dem letzten Stellbereich ein mittlerer Stellbereich mit luftseitiger Verstellung der Mischluftklappe MK von einer ersten Endstellung I mit vollständigem Verschluß des Mischraums MR gegenüber dem Warmluftstrom des Wärmetauschers WT bzw. völliger Öffnung gegenüber dem eingangsseitigen Frischluftstrom in eine zweite Endstellung II mit völliger Öffnung des Mischraums MR gegenüber dem Warmluftstrom des Wärmetauschers WT und damit völligem Verschluß gegenüber dem Frischluftstrom vorgesehen, wobei die Verstellung zwischen der ersten Endstellung I und der zweiten Endstellung II zweckmäßigerweise kontinuierlich erfolgt. In den Funktionsabläufen der durch das einzige Temperierungs-Stellmittel T erfolgenden Betätigungsfolgen beziehen sich die Prozentangaben auf den gesamten Stellbereich des Temperierungs-Stellnmittels T gemäß FIG 1 und die Temperaturangaben auf den Temperaturstellbereich gemäß FIG 2.

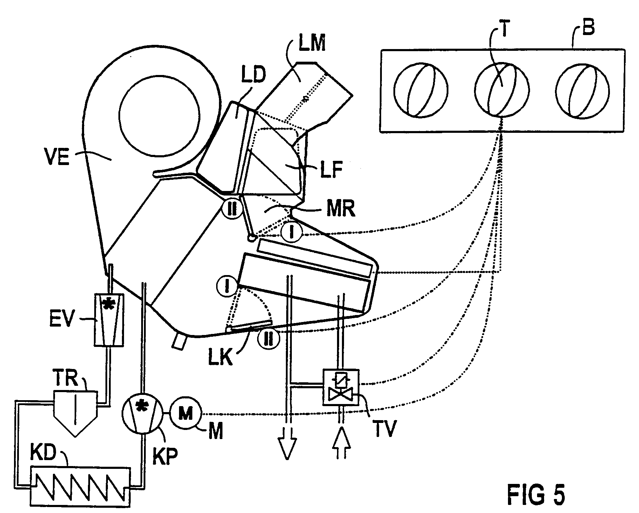

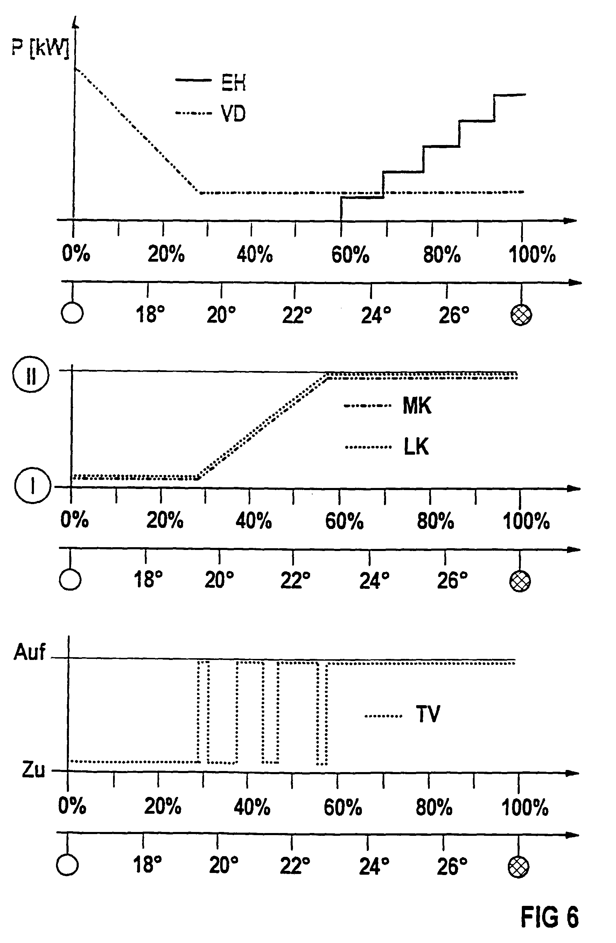

Gemäß FIG 5,6 ist im Unterschied zu FIG 3,4 als Nutzwärmeerzeuger eine in Abhängigkeit vom Temperierungs-Stellmittel T in dessen letztem Stellbereich einstellbare gesonderte elektrische Heizung, insbesondere eine PTC-Heizung, im Luftstrom vorzugsweise hinter dem kühlwassergespeisten Wärmetauscher WT angeordnet. Zusätzlich zur Mischluftklappe MK ist eine weitere Luftklappe LK am Eingang des Wärmetauschers WT vorgesehen, die mit Zwischenstellungen zwischen einer ersten Endstellung I mit vollständigem Verschluß des Zugangs zum Wärmetauschers WT und einer zweiten Endstellung II mit vollständiger Öffnung zu dem Wärmetauscher WT verstellbar ist; die Luftklappe LK wird dabei üblicherweise synchron zur Mischluftklappe MK betätigt.

Wie aus den Funktionsverläufen gemäß FIG 6 ersichtlich, wird zur Abwärmenutzung in dem mittleren Stellbereich erfindungsgemäß die zusätzliche Luftklappe LK zusammen mit der Mischluftklappe MK, vorzugsweise kontinuierlich, von der ersten Endstellung I in die zweite Endstellung II verstellt bzw. mittels eines Taktventils TV mit Bypass, vorzugsweise mit einem im Sinne einer kontinuierlichen Verstellung variablen Taktverhältnis, von einer vollständigen Schließstellung zu Beginn des mittleren Stellbereichs bis zu einer vollständigen Öffnungsstellung zu Ende des mittleren Stellbereiches die Kühlmittelzufuhr zum Wärmetauscher WT entsprechend verändert.

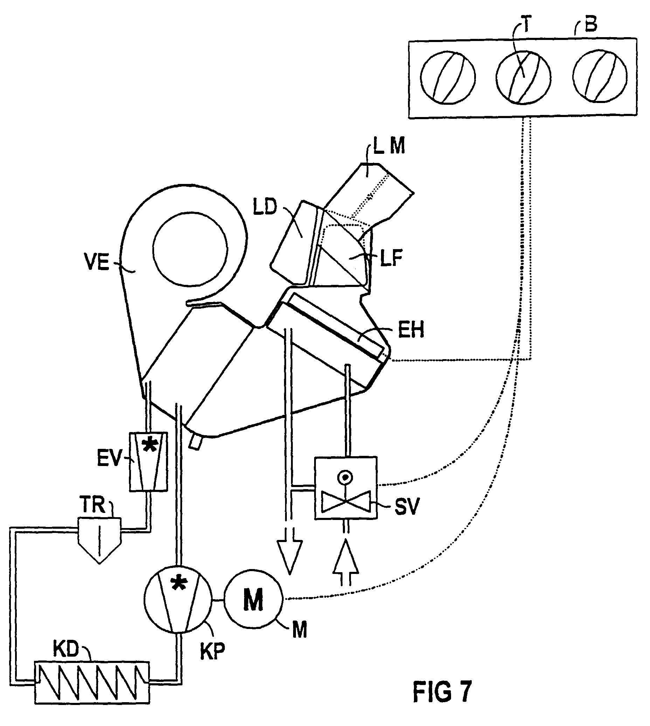

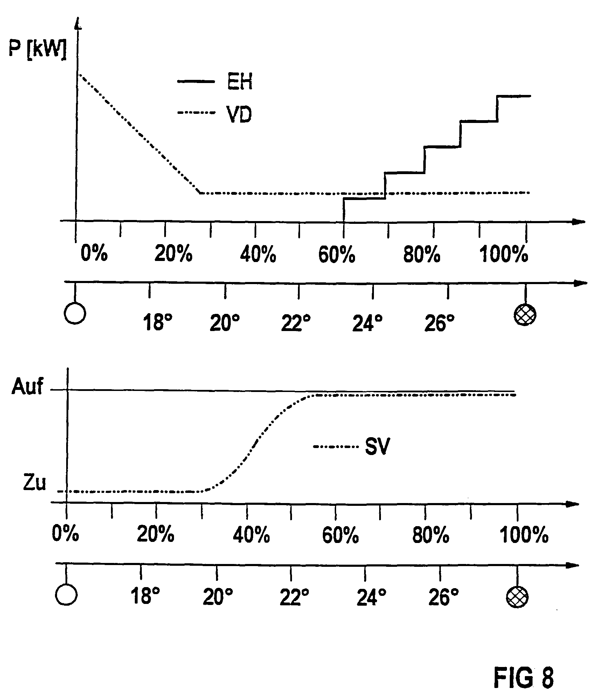

FIG 7,8 zeigen eine erfindungsgemäße Klimaanlage ohne luftseitige Regelung bzw. Steuerung mittels einer Mischluftklappe MK bzw. ohne eine Luftklappe LK, jedoch mit einem durch Anschluß an den Kühlkreislauf des Antriebsmotors des Kraftfahrzeuges mit Abwärme speisbaren Wärmetauscher WT, der eingangsseitig dauernd vom gesamten Luftstrom beströmt wird. Zur schnellen Einstellung der jeweils gewünschten Temperierung durch das einzige Temperierungs-Stellmittel T ist wiederum ein vom Antriebsmotor des Kraftfahrzeuges unabhängig einstellbarer Kompressor KP für den Verdampfer VD sowie ein Nutzwärmeerzeuger in Form einer elektrischen Heizung EH vorgesehen. Die Kältleistungseinstellung erfolgt wiederum in einem bevorzugten Stellbereich von 0-30% des gesamten Stellbereichs des einzigen Temperierungs-Stellmittels T; die Wärmeleistungseinstellung von einer kleineren auf eine höhere Leistung durch die elektrische Heizung EH liegt in einem letzten Stellbereich, vorzugsweise zwischen 60-100% des gesamten Stellbereichs, des -Temperierungs-Stellmittels T. Im mittleren Stellbereich ist eine wasserseitige Einstellung des zum Wärmetauschers WT fließenden Kühlwassers mittels eines Scheibenventils SV vorgesehen, das vorzugsweise kontinuierlich, von einer völligen Schließstellung des Zuflusses zu dem Wärmetauscher WT zu Beginn des mittleren Stellbereichs bis zu einer vollständigen Öffnungsstellung des Zuflusses zu dem Wärmetauscher WT zu Ende des mittleren Stellbereichs des einzigen Temperierungs-Stellmittel T veränderbar ist.

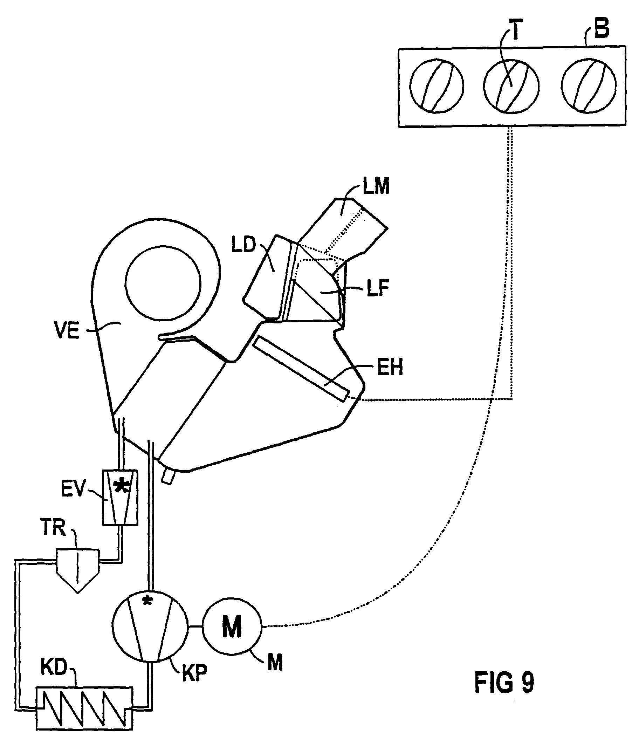

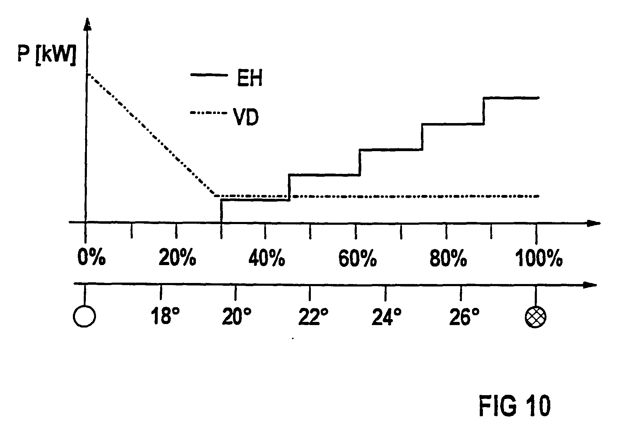

FIG 9,10 zeigen eine erfindungsgemäße Klimaanlage, die insbesondere zum Einsatz in Fahrzeugen ohne Abwärmenutzung für die Klimaanlage vorgesehen ist, bei denen ein an den Kühlkreislauf angeschlossener, durch Abwärme des Antriebsmotors des Kraftfahrzeuges gespeister Wärmetauscher in der Regel entfällt.

Die energiesparende, schnelle und einfache Temperierung durch das einzige Temperierungs-Stellmittel erfolgt im vorliegenden Fall einerseits in einem ersten Stellbereich durch Verstellen der Kälteleistung des Kälterzeugers von einer höheren auf eine niedere, insbesondere gerade noch zur Entfeuchtung der Innenraumluft geeigneten Kälteleistung und einer Erhöhung der Wärmeleistung der elektrischen Heizung EH in einem anschließenden Stellbereich von einer geringeren Wärmeleistung auf eine höhere Wärmeleistung; zweckmäßigerweise ist für den Kälteerzeuger eine kontinuierliche und für den Wärmeerzeuger eine stufenweise Verstellung vorgesehen.

## Patentansprüche

1. Kraftfahrzeug-Klimaanlage mit über ein einziges Temperierungs-Stellmittel (T) einstellbarer Temperierung des Innenraums zwischen einer unteren Kühltemperatur einerseits und einer oberen Heiztemperatur andererseits durch entsprechende Kühlung bzw. Erwärmung eines in den Innenraum geförderten Luftstroms, wobei mittels Verstellung des Temperierungs-Stellmittels (T) in einem ersten Stellbereich, insbesondere im Bereich von 0-30% des gesamten Stellbereiches, ein Kälteerzeuger (VD ; KP) von einer hohen Kälteleistung auf eine geringe Kälteleistung sowie in einem letzten Stellbereich ein Nutzwärmeerzeuger (EH bzw. DH) von einer geringen Wärmeleistung auf eine höhere Wärmeleistung verstellbar ist, **dadurch gekennzeichnet,** daß der Kälteerzeuger (VD ; KP) unabhängig von dem Motorantrieb des Kraftfahrzeuges selbstständig steuerbar oder regelbar ist und von einem Elektromotor (M) antreibbar ist und daß der Nutzwärmeerzeuger von der Abwärme des Kühlmittels des Motorantriebes unabhängig regelbar oder steuerbar ist.

2. Kraftfahrzeug-Klimaanlage nach Anspruch 1 mit einem zwischen dem ersten Stellbereich und dem letzten Stellbereich vorgesehenen mittleren Stellbereich mit luftseitiger Verstellung durch zumindest eine Mischluftklappe (MK) in einem Mischraum (MR) und/oder mit wasserseitiger Verstellung durch zumindest ein Ventil (TV;SV) in einem Wärmetauscher (WT).

3. Kraftfahrzeug-Klimaanlage nach Anspruch 2 mit einem letzten Stellbereich im Bereich von 60-100% des gesamten Stellbereichs des Stellmittels (T).

4. Kraftfahrzeug-Klimaanlage nach zumindest einem der Ansprüche 1-3 mit einer kontinuierlichen Verstellung des Kälteerzeugers (VD;KP) während des ersten Stellbereichs.

5. Kraftfahrzeug-Klimaanlage nach zumindest einem der Ansprüche 1-5 mit einem Mischraum (MR) mit ausgangsseitigen Verteilungs-Luftkanälen (LM bzw.LD bzw.LF) zum Innenraum des Kraftfahrzeuges und mit einer eingangsseitigen Mischluftklappe (MK), durch deren Verstellen mit Zwischenstellungen zwischen einer ersten Endstellung (I) und einer zweiten Endstellung (II) entweder Kaltluft bzw. Frischluft einerseits oder Warmluft andererseits zuführbar und die zu Beginn des mittleren Stellbereichs in die erste Endstellung (I) und zu Ende des Zwischen-Stellbereichs in die zweite Endstellung (II), insbesondere kontinuierlich, verstellt ist.

6. Kraftfahrzeug-Klimaanlage nach Anspruch 6 mit einer weiteren Luftklappe (LK), durch deren Verstellen mit Zwischenstellungen zwischen einer ersten Endstellung (I) und einer zweiten Endstellung (II) die Luftzufuhr zu dem Wärmetauscher (WT) voll gesperrt bzw. voll geöffnet und die zu Beginn des mittleren Stellbereichs in die erste Endstellung (I) und zu Ende des mittleren Stellbereichs in die zweite Endstellung (II), insbesondere kontinuierlich, verstellt ist.

7. Kraftfahrzeug-Klimaanlage nach zumindest einem der Ansprüche 1-7 mit durch einen Nutzwärmeerzeuger (EH bzw.DH) und/oder durch einen durch Abwärme des Kraftfahrzeuges erwärmbaren Wärmetauscher (WT) mit wasserseitiger Verstellung, insbesondere mittels eines Ventils (TV;SV) und eines Bypasses im Sinne einer, insbesondere kontinuierlichen, Verstellung des Ventils (TV;SV) zwischen einer Schließstellung zu Beginn des mittleren Stellbereichs und einer Öffnungsstellung zu Ende des mittleren Stellbereichs.

8. Kraftfahrzeug-Klimaanlage nach Anspruch 8 mit einem Taktventil (TV) mit einem im Sinne einer kontinuierlichen Verstellung variablen Taktverhältnis.

9. Kraftfahrzeug-Klimaanlage nach zumindest einem der Ansprüche 1-9 mit einem in Abhängigkeit von dem Temperierungs-Stellmittel (T) in dessen letztem Stellbereich von minimaler auf maximale Wärmeleistung verstellbaren, bei Vorhandensein eines Wärmetauschers WT vorzugsweise hinter diesem angeordneten, elektrischen Heizelement (EH), insbesondere einem PTC-Heizelement.

10. Kraftfahrzeug-Klimaanlage nach zumindest einem der Ansprüche 1-10 mit einem in den Kreislauf des Wärmetauschers (WT) integrierten, in Abhängigkeit von dem Temperierungs-Stellmittel (T) in dem letzten Stellbereich von minimaler auf maximale Wärmeleistung verstellbaren elektrischen Durchlauferhitzer (DH).

11. Kraftfahrzeug-Klimaanlage nach einem der Ansprüche 1-11 mit einem unabhängig von dem Motorantrieb des Kraftfahrzeuges von einem Elektromotor angetriebenen, in Abhängigkeit von dem Temperierungs-Stellmittel (T) in dem ersten Stellbereich von maximaler und auf minimale Kälteleistung verstellbaren Kompressor für den Verdampfer (VD).

## Claims

1. Motor vehicle air-conditioning system with temperature regulation which can be set using a single temperature regulator (T) for the interior between a lower cooling temperature, on the one hand, and an upper heating temperature, on the other hand, as a result of the appropriate cooling or heating of an air stream conveyed into the interior, in which, by adjusting the temperature regulator (T) in a first regulating range, in particular in the range from 0-30% of the total regulating range, a cooling unit (VD; KP) with a high cooling power can be changed to a low cooling power, and, in a last regulating range, a usable-heat source (EH or DH) with a low heating power can be changed to a higher heating power, characterised in that the cooling unit (VD; KP) can be controlled or regulated on its own, independently of the engine drive for the motor vehicle, and can be driven by an electric motor, and in that the usable heat source can be regulated or controlled independently of the heat given off by the coolant for the engine drive.

2. Motor-vehicle air-conditioning system according to Claim 1, with a middle regulating range, provided between the first regulating range and the last regulating range, with air-side adjustment using at least one mixing flap (MK) in a mixing chanter (MR) and/or with water-side adjustment using at least one valve (TV; SV) in a heat exchanger (WT).

3. Motor-vehicle air-conditioning system according to Claim 2, with a last regulating range in the range from 60-100% of the total regulating range of the regulator (T).

4. Motor-vehicle air-conditioning system according to at least one of Claims 1-3, with continuous adjustment of the cooling unit (VD; KP) over the first regulating range.

5. Motor-vehicle air-conditioning system according to at least one of Claims 1-4, with a mixing chamber (MR) with output distributing air ducts (LM or LD or LF) to the interior of the motor vehicle and with an input mixing flap (MK), which, when adjusted with intermediate settings between a first end setting (I) and a second end setting (II) , can supply either cold air or fresh air, on the one hand, or hot air on the other, and which, at the start of the middle regulating range, is adjusted to the first end setting (I) , and, at the end of the intermediate regulating range, is adjusted to the second end setting (II), especially continuously.

6. Motor-vehicle air-conditioning system according to Claim 5, with a further flap (LK), which, when adjusted with intermediate settings between a first end setting (I) and a second end setting (II), completely blocks or completely opens the air supply to the heat exchanger (WT), and which, at the start of the middle regulating range, is adjusted to the first end setting (I), and, at the end of the middle regulating range, is adjusted to the second end setting (II), especially continuously.

7. Motor-vehicle air-conditioning system according to at least one of Claims 1-6, with a heat exchanger (WT) with water-side adjustment especially by means of a valve (TV; SV) and a bypass, which heat exchanger can be heated up by the heat given off by the motor vehicle and/or by a usable heat source (EH or DH), in the context of adjusting, especially continuously, the valve (TV; SV) between a closed setting at the start of the middle setting range and an open setting at the end of the middle setting range.

8. Motor-vehicle air-conditioning system according to Claim 7, with a timer valve (TV) having a variable timing ratio in the context of continuous adjustment.

9. Motor-vehicle air-conditioning system according to at least one of Claims 1-8, with an electrical heating element (EH), in particular a PTC heating element, which can be adjusted depending on the temperature regulator (T) in its last regulating range from minimum to maximum heating power and is preferably arranged downstream of a heat exchanger WT if there is one.

10. Motor-vehicle air-conditioning system according to at least one of Claims 1-9, with an electrical flow heater (DH) which is integrated into the circuit of the heat exchanger (WT) and can be adjusted depending on the temperature regulator (T) in the last regulating range from minimum to maximum heating power.

11. Motor-vehicle air-conditioning system according to one of Claims 1-10, with a compressor, for the evaporator (VD), which is driven independently of the engine drive for the motor vehicle by an electric motor and can be adjusted depending on the temperature regulator (T) in the first regulating range from maximum to minimum cooling power.

## Revendications

1. Système de climatisation pour véhicule automobile produisant un ajustement de température, réglable par un moyen unique de réglage de température (T), de l'habitacle entre une température inférieure de refroidissement et une température supérieure de chauffage, par refroidissement ou chauffage correspondant d'un courant d'air envoyé dans l'habitacle, dans lequel un générateur de froid (VD; KP) peut être porté d'une haute puissance frigorifique à une basse puissance frigorifique par manoeuvre du moyen de réglage de température (T) dans une première plage de réglage, en particulier dans le domaine de 0 à 30 % de la plage totale de réglage, et un générateur de chaleur utile (EH ou DH) peut être porté d'une basse puissance calorifique à une haute puissance calorifique par manoeuvre du moyen de réglage de température dans une dernière plage de réglage, caractérisé par le fait que le générateur de froid (VD; KP) peut être commandé ou régulé de manière autonome indépendamment du moteur du véhicule automobile et être entraîné par un moteur électrique (M), et que le générateur de chaleur utile peut être régulé ou commandé indépendamment de la chaleur perdue du fluide de refroidissement du moteur.

2. Système de climatisation pour véhicule automobile selon la revendication 1, comportant une plage intermédiaire de réglage prévue entre la première plage de réglage et la dernière plage de réglage, avec réglage côté air par au moins un volet d'air mixé (MK) dans une chambre de mélange (MR) et/ou avec réglage côté eau par au moins une vanne (TV; SV) dans un échangeur de chaleur (WT).

3. Système de climatisation pour véhicule automobile selon la revendication 2, comportant une dernière plage de réglage dans le domaine de 60 à 100 % de la plage totale de réglage du moyen de réglage (T).

4. Système de climatisation pour véhicule automobile selon au moins une des revendications 1 à 3, comportant un réglage progressif du générateur de froid (VD; KP) dans la première plage de réglage.

5. Système de climatisation pour véhicule automobile selon au moins une des revendications 1 à 5, comportant une chambre de mélange (MR) avec conduits d'air de distribution côté sortie (LM, LD, LF) allant à l'habitacle du véhicule automobile et avec un volet d'air mixé côté entrée (MK) dont la manoeuvre avec positions intermédiaires entre une première position extrême (I) et une deuxième position extrême (II) permet l'envoi soit d'air froid ou d'air frais, soit d'air chaud, et qui est amené, en particulier de façon progressive, au début de la plage intermédiaire de réglage, dans la première position extrême (I) et, à la fin de la plage intermédiaire de réglage, dans la deuxième position extrême (II).

6. Système de climatisation pour véhicule automobile selon la revendication 6, comportant un autre volet d'air (LK) dont la manoeuvre avec positions intermédiaires entre une première position extrême (I) et une deuxième position extrême (II) arrête complètement ou ouvre complètement l'arrivée d'air à l'échangeur de chaleur (WT), et qui est amené, en particulier de façon progressive, au début de la plage intermédiaire de réglage, dans la première position extrême (I) et, à la fin de la plage intermédiaire de réglage, dans la deuxième position extrême (II).

7. Système de climatisation pour véhicule automobile selon au moins une des revendications 1 à 7, avec réglage côté eau par un générateur de chaleur utile (EH ou DH) et/ou par un échangeur de chaleur (WT) pouvant être chauffé par de la chaleur perdue du véhicule automobile, en particulier au moyen d'une vanne (TV; SV) et d'une dérivation dans le sens d'une manoeuvre en particulier progressive de la vanne (TV; SV) entre une position fermée au début de la plage intermédiaire de réglage et une position ouverte à la fin de la plage intermédiaire de réglage.

8. Système de climatisation pour véhicule automobile selon la revendication 8, comportant une vanne à fonctionnement cyclique (RV) ayant un rapport cyclique variable dans le sens d'un réglage progressif.

9. Système de climatisation pour véhicule automobile selon au moins une des revendications 1 à 9, comportant un élément chauffant électrique (EH), en particulier à coefficient de température positif, réglable en fonction du moyen de réglage de température (T), dans la dernière plage de réglage de celui-ci, d'une puissance calorifique minimale à une puissance calorifique maximale, placé, en cas d'existence d'un échangeur de chaleur (WT), de préférence après celui-ci.

10. Système de climatisation pour véhicule automobile selon au moins une des revendications 1 à 10, comportant un dispositif de chauffage électrique instantané (DH) intégré au circuit de l'échangeur de chaleur (WT) et réglable en fonction du moyen de réglage de température (T), dans la dernière plage de réglage, d'une puissance calorifique minimale à une puissance calorifique maximale.

11. Système de climatisation pour véhicule automobile selon l'une des revendications 1 à 11, comportant un compresseur pour l'évaporateur (VD) qui est entraîné par un moteur électrique indépendamment du moteur du véhicule automobile et est réglable en fonction du moyen de réglage de température (T), dans la première plage de réglage, d'une puissance frigorifique maximale à une puissance frigorifique minimale.
